(19) Europäisches Patentamt / European Patent Office / Office européen des brevets

(11) **EP 3 067 373 B1**

(12) **EUROPEAN PATENT SPECIFICATION**

(45) Date of publication and mention
of the grant of the patent:
**20.06.2018 Bulletin 2018/25**

(21) Application number: **14860710.4**

(22) Date of filing: **07.11.2014**

(51) Int Cl.:
*C08F 226/02* *(2006.01)*     *C08F 8/12* *(2006.01)*
*C08F 222/10* *(2006.01)*     *C08F 218/14* *(2006.01)*
*C08F 2/10* *(2006.01)*     *C08F 4/04* *(2006.01)*
*C08F 4/34* *(2006.01)*     *C08F 4/40* *(2006.01)*
*C08F 2/48* *(2006.01)*     *C08J 3/12* *(2006.01)*

(86) International application number:
**PCT/JP2014/079590**

(87) International publication number:
**WO 2015/068806 (14.05.2015 Gazette 2015/19)**

(54) **METHOD FOR PRODUCING VINYLAMINE (CO)POLYMER**

VERFAHREN ZUR HERSTELLUNG EINES VINYLAMIN-(CO)POLYMERS

PROCÉDÉ DE PRODUCTION D'UN (CO)POLYMÈRE DE VINYLAMINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.11.2013 JP 2013231762**

(43) Date of publication of application:
**14.09.2016 Bulletin 2016/37**

(73) Proprietor: **Mitsubishi Chemical Corporation
Tokyo 100-8251 (JP)**

(72) Inventor: **ISHII Akihiro
Yokohama-shi
Kanagawa 230-0053 (JP)**

(74) Representative: **Ter Meer Steinmeister & Partner
Patentanwälte mbB
Nymphenburger Straße 4
80335 München (DE)**

(56) References cited:
**EP-B1- 1 034 194        JP-A- S6 151 007
JP-A- 2002 145 963      JP-A- 2003 512 608
JP-A- 2008 183 541**

• **JOO-HYUN HAN ET AL.: 'A facile approach to
synthesize uniform hydrogel shells with
controllable loading and releasing properties'
CHEMICAL COMMUNICATIONS no. 8, 2008,
pages 984 - 986, XP055279852**

**Description**

TECHNICAL FIELD

The present invention relates to a method for producing a vinylamine (co)polymer.

The present disclosure is based on and claims the benefit of priority of Japanese Patent Application No. 2013-231762 filed in Japan on November 8, 2013.

BACKGROUND ART

A vinylamine (co)polymer is a useful material which has been extensively used e.g. as a coagulant, a chemical for paper-making, a fiber-treating agent or an additive for paints. It has been required to be provided in the form of polymer having a broad range molecular weight including not only a high molecular weight polymer having a molecular weight of not less than 4,000,000 but also a low molecular weight polymer having a molecular weight of not more than 100,000 depending on the use thereof. As described herein, the term "(co)polymer" indicates either a polymer or a copolymer.

Various methods for producing a vinylamine (co)polymer are known. In particular, a method for producing a vinylamine (co)polymer by hydrolyzing an N-vinylcarboxylic acid amide (co)polymer in the presence of an acid or a base is generally carried out. As a method for producing an N-vinylcarboxylic acid amide (co)polymer, various methods such as a reverse phase suspension polymerization method, an emulsion polymerization method, a photopolymerization method, an aqueous solution static adiabatic polymerization method, or an aqueous solution dropping polymerization method have been used. Among them, the photopolymerization method and the aqueous solution static adiabatic polymerization method are more convenient and have an advantage that many kinds of polymers having various molecular weights can be respectively produced by appropriately selecting the polymerization conditions.

As described above, polymers having a broad range molecular weight including not only a polymer with a high molecular weight but also a polymer with a low molecular weight are used as an N-vinylcarboxylic acid amide (co)polymer depending on the use. For such reasons, it is required to produce an N-vinylcarboxylic acid amide (co)polymer with desired molecular weight. However, by a single polymerization method, it is difficult to produce efficiently polymers having a broad range molecular weight. For example, the aqueous solution dropping polymerization is useful for producing a polymer with relatively low molecular weight. However, for producing a polymer having high molecular weight, the viscosity of solution is increased excessively, which makes it difficult to be stirred. Thus, it is necessary to lower the concentration. Meanwhile, the aqueous solution static adiabatic polymerization, photopolymerization and reverse phase suspension polymerization are suitable for producing an N-vinylcarboxylic acid amide (co)polymer with high molecular weight, and they have high production efficiency. However, an aqueous polymer solution or a suspension solution thereof needs to be extracted upon the termination of the polymerization. For such reasons, when it is desired to produce a polymer with relatively low molecular weight, poor handlability is yielded as the gel obtained after the termination of the polymerization is soft so that it may e.g. adhere to a milling machine. For such reasons, the aqueous solution static adiabatic polymerization, photopolymerization and reverse phase suspension polymerization are not suitable for producing an N-vinylcarboxylic acid amide (co)polymer with a broad range molecular weight.

As a method for solving those problems, an aqueous solution polymerization in which monomers containing N-vinyl carboxylic acid amide are polymerized in the presence of an inorganic salt at concentration equal to or lower than saturated solution concentration is known (Patent Document 1). As an inorganic salt is added, solid content in the gel is increased so that it can be obtained as hydrous gel which does not have any problem in terms of handlability such as adhesion to a milling machine and it has hardness enough to be subjected to a pulverization treatment after drying.

However, when an N-vinylcarboxylic acid amide (co)polymer with low molecular weight is produced by the method of Patent Document 1, a great amount of salts are incorporated in the polymer so that there may be a limitation depending on use. Furthermore, the gel cannot be prepared to have desired physical properties unless the addition amount of the inorganic salt is increased. The inorganic salt added in an excess amount is industrially disadvantageous, since they may cause corrosion of metals.

Meanwhile, as a method for producing gel with high strength, a method of producing crosslinked gel by copolymerization with a crosslinking agent such as 1,2-ethanediol diglycidyl ether without using an inorganic salt is also known (Patent Document 2 and Patent Document 3).

However, when the N-vinylcarboxylic acid amide (co)polymer obtained by the method of Patent Document 2 or Patent Document 3 is hydrolyzed in the presence of an acid or a base, the obtained vinylamine (co)polymer remains in a state in which it is crosslinked with a crosslinking agent such as 1,2-ethanediol diglycidyl ether or an inorganic salt. In this case, as the vinylamine (co)polymer undergoes expansion in water, it is difficult to prepare it as an aqueous solution. Accordingly, it cannot be used as a coagulant or a chemical for paper-making for which high solubility is required.

CITATION LIST

PATENT DOCUMENT

Patent Document 1: JP 2010-59220 A
Patent Document 2: JP 2009-179724 A
Patent Document 3: JP 2000-17026 A

SUMMARY OF THE INVENTION

PROBLEM TO BE SOLVED BY THE INVENTION

The present invention is devised under the circumstances described above. As a result of intensive studies in consideration of the above problems, the inventors of the present invention found that, even at low molecular weight, a gel-like N-vinylcarboxylic acid amide (co)polymer with excellent handlability can be produced and also a vinylamine (co)polymer with excellent water solubility can be produced. The present invention is achieved accordingly.

MEANS FOR SOLVING PROBLEM

Namely, the present invention includes the following embodiments.

[1] A method for producing a vinylamine (co)polymer by hydrolyzing an N-vinylcarboxylic acid amide (co)polymer having crosslinked bonds, in which at least a part of the crosslinked bonds are dissociated by the hydrolysis, and the N-vinylcarboxylic acid amide (co)polymer is insoluble in water and the vinylamine (co)polymer to be obtained is soluble in water.

[2] The production method described in [1], in which the crosslinked bonds are formed by polymerization with N-vinyl carboxylic acid amide by using polyfunctional (meth)acrylate as a crosslinking agent.

[3] The production method described in any one of [1] to [2], in which the N-vinylcarboxylic acid amide (co)polymer is an N-vinyl formamide (co)polymer.

[4] The production method described in any one of [1] to [3], in which the N-vinylcarboxylic acid amide (co)polymer is an N-vinylcarboxylic acid amide (co)polymer which is obtained by adiabatic polymerization or photopolymerization.

[5] The production method described in any one of [1] to [4], in which the N-vinylcarboxylic acid amide (co)polymer is an N-vinylcarboxylic acid amide (co)polymer which is obtained by adiabatic polymerization using ferrous sulfate as a polymerization initiator.

[6] The production method described in [2], in which the polyfunctional (meth)acrylate is used at 0.1 to 15% by mass relative to 100% by mass of a raw material monomer of the N-vinylcarboxylic acid amide (co)polymer.

[7] The production method described in any one of [1] to [6], in which the N-vinylcarboxylic acid amide (co)polymer is dried at 105°C or lower and pulverized to powder before the hydrolysis.

[8] The production method described in any one of [1] to [7], in which the content of unsaturated aldehyde in the N-vinylcarboxylic acid amide (co)polymer is 0.05% by mass or less relative to 100% by mass of the N-vinylcarboxylic acid amide (co)polymer.

[9] The production method described in any one of [1] to [8], in which the hydrolysis is carried out in the presence of a strong acid or a strong base.

Here, the expression that a polymer is "water soluble" means that, when a measurement is carried out as described in Examples given below (measurement of insolubles of N-vinylcarboxylic acid amide (co)polymer or vinylamine (co)polymer), the amount of insolubles is small so that an aqueous solution can be obtained. Specifically, the amount of the insolubles in a soluble polymer is preferably such that, when 495 g of water is added to 5 g of the net amount of a vinylamine (co)polymer to have 1% by mass aqueous solution of a vinylamine (co)polymer, 0 to 50 g of insolubles generally occur, more preferably, 0 to 10 g, and even more preferably, 0 to 1 g. As described herein, the term "insolubles" indicates a undissolved gel portion of a polymer that is expanded due to absorption of water.

As described herein, the term "water insoluble" means that, when a measurement is carried out as described in Examples given below (measurement of insolubles of N-vinylcarboxylic acid amide (co)polymer or vinylamine (co)polymer), the amount of insolubles is high so that an aqueous solution cannot be obtained. Specifically, the amount of the insolubles in a water-insoluble polymer is preferably such that, when 495 g of water is added to 5 g of the net amount of an N-vinylcarboxylic acid amide (co)polymer or a vinylamine (co)polymer to have 1% by mass aqueous solution of an N-vinylcarboxylic acid amide (co)polymer or a vinylamine (co)polymer, insolubles are generally more than 50 g. Furthermore, a case in which a particulate polymer is only expanded and not completely dissolved in water when it is desired to be dissolved in water is also defined to be water insoluble.

The insolubles can be measured according to the following method.

(Measurement of insoluble in N-vinylcarboxylic acid amide (co)polymer or vinylamine (co)polymer)

To 5 g of the net amount of an N-vinylcarboxylic acid amide (co)polymer or a vinylamine (co)polymer, 495 g of water is added to have an aqueous solution with total amount of 500 g. After being stirred for 1 hour at 280 revolutions/minute, the solution is filtered through a wire screen with a mesh size of 180 $\mu$m. The residues on a wire screen are washed with tap water. Then, by regarding the residues on a wire screen as an insoluble gel portion, the weight is measured.

EFFECT OF THE INVENTION

According to the production method described in the present invention, an N-vinylcarboxylic acid amide (co)polymer with various molecular weights including high molecular weight and low molecular weight can be efficiently produced as a gel-like polymer with excellent handlability. Furthermore, by dissociating at least a part of the crosslinked bonds in the polymer during hydrolysis, a high-quality vinylamine (co)polymer with excellent solubility can be obtained. The vinylamine (co)polymer with a broad range molecular range produced by the production method of the present invention is a polymer which is highly useful in various application fields such as a coagulant employed in water treatments, in particular, waste water treatments, a paper-making chemical employed in paper industries, and an additive for paints, and it can also be used in more extensive applications.

MODE(S) FOR CARRYING OUT THE INVENTION

Hereinafter, the present invention will be described in detail.

The N-vinylcarboxylic acid amide (co)polymer used in the present invention is a water-insoluble N-vinylcarboxylic acid amide (co)polymer with crosslinked bonds, and the vinylamine (co)polymer obtained by hydrolysis of the above polymer is soluble in water.

Furthermore, the method for producing a vinylamine (co)polymer according to the present invention is a method for producing an N-vinylcarboxylic acid amide (co)polymer with crosslinked bonds by hydrolysis, in which at least part of the crosslinked bonds are dissociated by the hydrolysis.

The "crosslinked bonds" means a bond of structural units derived from the crosslinked bonds in an N-vinylcarboxylic acid amide (co)polymer obtained by copolymerization of N-vinyl carboxylic acid amide and a crosslinking agent having an ethylenically unsaturated bond.

The N-vinyl carboxylic acid amide is a monomer represented by the general formula: $CH_2$=CH-NHCOR (in the formula, R is a hydrogen atom or an alkyl group having 1 to 6 carbon atoms). Specific examples thereof include N-vinyl propionic amide (R=$C_2H_5$) and N-vinyl butyric amide (R=$C_3H_7$) as well as N-vinyl formamide (R=H) and N-vinyl acetamide (R=$CH_3$). Among them, N-vinyl formamide is preferred in view of easiness in derivatization to vinylamine (co)polymer. Namely, the N-vinylcarboxylic acid amide (co)polymer is preferably an N-vinyl formamide (co)polymer containing N-vinyl formamide unit.

The N-vinyl carboxylic acid amide can be copolymerized with an optional monomer having an ethylenically unsaturated bond as necessary. Examples of the monomer copolymerizable with the N-vinyl carboxylic acid amide include (meth)acrylic acid and salts thereof, (meth)acrylic acid esters, (meth)acrylonitrile, (meth)acrylamide, N-alkyl (meth)acrylamides, N,N-dialkyl (meth)acrylamides, dialkylaminoalkyl (meth)acrylayte and salts thereof or quaternarized products or salts of quaternarized products thereof such as dialkylaminoethyl (meth)acrylamides and salts thereof or quaternarized products or salts of quaternarized products thereof, and dialkylaminopropyl (meth)acrylamides and salts thereof or quaternarized products or salts of quaternarized products thereof, diacetone acrylamide, N-vinyl pyrrolidone, N-vinyl caprolactam, and vinyl acetate. They may be used singly, or two or more types of them can be used. As described herein, the "quaternarized products" mean that the amine included in the structure is prepared as a quaternary amine. As a salt of (meth)acrylic acid, a sodium salt and an ammonium salt are preferable. As a salt of dialkylaminoalkyl (meth)acrylate, a sodium salt and an ammonium salt are preferable. As a salt of a quaternarized product, a sodium salt and an ammonium salt are preferable.

The content ratio of N-vinyl carboxylic acid amide monomer in the entire monomers used for polymerization reaction is usually 5% by mol or more, preferably 10% by mol or more, more preferably 50% by mol or more, and particularly preferably 85 to 100% by mol. Meanwhile, it is intended herein that the crosslinking agent is not included in the entire monomers.

The content ratio of the N-vinyl carboxylic acid amide unit relative to entire structural units constituting the N-vinylcarboxylic acid amide (co)polymer is usually 5% by mol or more, preferably 10% by mol or more, more preferably 50% by mol or more, and particularly preferably 85 to 100% by mol. However, crosslinking agent unit is not considered herein. Meanwhile, as described herein, the "structural unit" and "unit" indicate a monomer unit constituting the polymer.

The N-vinylcarboxylic acid amide (co)polymer with excellent handlability is a water-insoluble N-vinylcarboxylic acid amide (co)polymer having crosslinked bonds, and it is necessary that the vinylamine (co)polymer obtained by hydrolysis of the above polymer is soluble in water. The above N-vinylcarboxylic acid amide (co)polymer can be obtained by copolymerization of N-vinyl carboxylic acid amide and a crosslinking agent forming crosslinked bonds in which at least a part of the previously crosslinked bonds can be dissociated by hydrolysis.

Examples of specific types of the crosslinking agent include a compound with plural acrylamide structures such as N,N'-methylene bisacrylamide and N,N'-propylene bisacrylamide; a compound having two or more vinyl ester structures in one molecule such as divinyl oxalic acid, divinyl malonic acid, divinyl succinic acid, divinyl glutaric acid, divinyl adipic acid, divinyl pimellic acid, divinyl maleic acid, divinyl fumaric acid, trivinyl citric acid, trivinyl trimellitic acid, and tetravinyl pyromellitic acid; and polyfunctional (meth)acrylate such as ethylene glycol di(meth)acrylate, diethylene glycol di(meth)acrylate, triethylene glycol di(meth)acrylate, polyethylene glycol di(meth)acrylate, trimethylol propane tri(meth)acrylate, and pentaerythritol tri(meth)acrylate. In particular, it is preferable that the crosslinked bonds are formed by using polyfunctional (meth)acrylate which is easily hydrolyzed in the presence of an acid or a base. As described herein, the "(meth)acrylate" means acrylate and/or methacrylate. The "polyfunctional (meth)acrylate" means an ester between alcohol with two or more hydroxyl groups and (meth)acrylic acid.

When a part of the crosslinked bonds are dissociated by hydrolysis, the amide bond or ester bond included in the crosslinked bonds converts into a carboxyl group or a hydroxyl group. Accordingly, the vinylamine (co)polymer to be obtained can be more improved in water solubility.

The crosslinking agent can be used singly, or two or more types of them can be used.

The addition amount of the crosslinking agent is preferably 0.1% by mass or more, more preferably 1% by mass or more, and even more preferably 2% by mass or more relative to 100% by mass of a raw material monomer of N-vinyl carboxylic acid amide. Furthermore, it is preferably 15% by mass or less, and more preferably 10% by mass or less. Specifically, it is preferably 0.1 to 15% by mass, more preferably 1 to 10% by mass, and even more preferably 2 to 10% by mass. If the addition amount is excessively low, a sufficiently crosslinked structure is not formed so that the handlability is not improved due to weak gel strength. On the other hand, if the addition amount is excessively high, the crosslinking density becomes excessively high. As a result, the crosslinked bonds cannot be completely dissociated by hydrolysis, such that there is a problem that insolubles generate. As described herein, the term "raw material monomer" means all monomers containing a crosslinking agent for synthesizing of an N-vinylcarboxylic acid amide (co)polymer.

Relative to the entire structural units constituting the N-vinyl carboxylic acid amide polymer, the content ratio of the crosslinking agent unit is preferably 0.1 to 5% by mol, and more preferably 0.5 to 3% by mol.

The method for polymerizing N-vinyl carboxylic acid amide is not particularly limited. However, examples thereof include an aqueous solution polymerization as described in JP 61-118406 A and adiabatic polymerization as described in the pamphlet of WO 00/58378 in which a redox initiator and an azo initiator are used in combination thereof. Further examples thereof include photopolymerization as described in JP 3704660 B1, that is, photopolymerization in which an aqueous monomer solution is developed into a thin film and irradiation with light is performed while removing the heat from a single side and/or both sides of a thin film, and suspension polymerization as described in JP 5-97931 A in which an aqueous monomer solution is subjected to water-in-oil type suspension polymerization in a hydrocarbon dispersion medium in the presence of a non-ionic surface active agent (emulsifying agent) with HLB of 9 to 20. Among them, from the viewpoint of easy operability, the adiabatic polymerization and photopolymerization are preferable.

At the time of polymerization, a gel quality modifier can be allowed to be present e.g. for suppressing the adhesion of hydrous gel after polymerization to an apparatus. As described herein, the expression "hydrous gel" means a gel-like substance containing water. Examples of the gel quality modifier include polyalkylene glycols such as polyethylene glycol and polypropylene glycol; a non-ionic surface active agent such as polyoxyethylene alkylphenyl ether, polyoxyethylene alkyl ether, polyoxyethylene carboxylic acid ester, and alkylene glycol alkyl ether; a cationic surface active agent such as tetraalkyl quaternary ammonium salt, trialkylbenzyl quaternary ammonium salt, and allcylpyridinium salt; and silicones such as silicone oil and silicone emulsion. Those gel quality modifiers can be used in combination of two or more types thereof. The use amount of the gel quality modifier is, relative to 100 parts by mass of the monomer, preferably 10 parts by mass or less, and more preferably 1 part by mass or less.

Furthermore, a stabilizer such as buffer solution can be also used at the time of polymerization. Examples of the stabilizer include ammonium chloride and sodium phosphate. The use amount of the stabilizer is, relative to 100 parts by mass of the monomer, preferably 0.1 part by mass or more, and more preferably 1 part by mass or more. Furthermore, it is preferably 20 parts by mass or less, and more preferably 15 parts by mass or less. Specifically, it is preferably 0.1 to 20 parts by mass, and more preferably 1 to 15 parts by mass.

The polymerization is generally performed at pH of 5 to 9. When the pH is not within this range, a loss caused by hydrolysis of N-vinyl carboxylic acid amide is increased. pH is preferably adjusted with phosphoric acid. The polymerization initiation temperature is generally 0 to 40°C, preferably 0 to 30°C, and more preferably 0 to 20°C.

Furthermore, at the time of polymerization, the molecular weight can be adjusted by using a chain transfer agent. Examples of the chain transfer agent include alcohols such as isopropyl alcohol or allyl alcohol, mercaptans such as thioglycolate or thioglycerol, and phosphorus acid salts such as sodium hypophosphite (sodium phosphinate).

The adiabatic polymerization is preferably performed with an aqueous solution. In that case, by adding the monomers to an adiabatic tank provided with an air blowing pipe for blowing inert gas such as nitrogen and blowing the air after addition of a radical polymerization initiator, or by adding and mixing a radical polymerization initiator to the monomer after the air blowing, the polymerization is initiated. At that time, concentration of the monomers in an aqueous monomer solution is preferably 20% by mass or more, and more preferably 25% by mass or more relative to the total mass of the aqueous solution. Furthermore, it is preferably 40% by mass or less, and more preferably 35% by mass or less. More specifically, it is preferably 20 to 40% by mass, and more preferably 25 to 35% by mass. If the monomer concentration is excessively low, a gel to be obtained tends to be softened so that there can be problems such as adverse influence on drying step owing to an occurrence of fusion of the gel particles having a reduced particle size as well as deterioration in handlability such as transportability and movability. On the other hand, if the monomer concentration is excessively high, the amount of heat generated from the reaction tends to be large, so that undesirable boiling polymerization tends to be caused. Accordingly, the aqueous solution adiabatic polymerization cannot be achieved.

Examples of the polymerization initiator used in the adiabatic polymerization include an azo initiator, a redox initiator, a peroxide initiator, and a combination of these initiators. Specific examples of the water soluble azo initiator include 2,2'-azobis(amidinopropane)dihydrochloride, 2,2'-azobis[2-(5-methyl-2-imidazolin-2-yl)propane]dihydrochloride, and 4,4'-azobis (4-cyano-valeric acid). Specific examples of the oil soluble azo initiator include 2,2'-azobis-isobutyronitrile, 1,1'-azobis(cyclohexanecarbonitrile), 2,2'-azobis(2-methyl butyronitrile), 2,2'-azobis(2-methyl propionate), and 4,4'-azobis(4-methoxy-2,4-dimethyl)valeronitrile.

Specific examples of the redox initiator include combination of t-butylhydroperoxide, ammonium peroxodisulfate with sodium sulfite, sodium hydrogen sulfite, trimethylamine, tetramethyl ethylenediamine, and ferrous sulfate. In particular, as ferrous sulfate is hardly affected by the impurities present in N-vinyl carboxylic acid amide, it can contribute to maintaining the sufficient polymerization rate even when the purity of N-vinyl carboxylic acid amide is low.

Specific examples of the peroxide polymerization initiator include t-butyl hydroperoxide, ammonium peroxodisulfate or potassium, hydrogen peroxide, benzoyl peroxide, lauroyl peroxide, octanoyl peroxide, succinic peroxide, and t-butylperoxy 2-ethylhexanoate.

Among those polymerization initiators, a combination of a redox polymerization initiator and a water soluble azo polymerization initiator is preferable. In addition, as a redox polymerization initiator, it is preferable that t-butyl hydroperoxide is combined with sodium sulfite sodium hydrogen sulfite, or ferrous sulfate, and 2,2'-azobis(amidinopropane)dihydrochloride is also used as a water soluble azo polymerization initiator. With regard to the use amount of an azo polymerization initiator and a redox polymerization initiator, for an azo polymerization initiator, it is preferably 0.001% by mass or more, more preferably 0.002% by mass or more, and even more preferably 0.005% by mass or more relative to the monomer. Furthermore, it is preferably 1% by mass or less, more preferably 0.5% by mass or less, and even more preferably 0.2% by mass or less. Specifically, it is preferably 0.001 to 1% by mass, more preferably 0.002 to 0.5% by mass, and even more preferably 0.005 to 0.2% by mass. For a redox polymerization initiator, it is preferably 0.001% by mass or more, and more preferably 0.002% by mass or more relative to the monomer. Furthermore, it is preferably 0.1% by mass or less, and more preferably 0.07% by mass or less. More specifically, it is preferably 0.001 to 0.1% by mass, and more preferably 0.002 to 0.07% by mass. The polymerization reaction can be stably carried out with the use amount described above.

The polymerization initiator may be used either singly or in combination of two or more types thereof.

As a method for extracting hydrous gel from a reaction vessel, a method in which nitrogen flushing is terminated after mixing of a polymerization initiator in a monomer composition followed by standing is completed, additional aging for 60 to 120 minutes is performed after confirming the highest temperature in a reaction vessel as caused by polymerization reaction, and then hydrous gel is extracted from the reaction vessel is preferable.

When there is a large amount of unreacted N-vinyl carboxylic acid amide remained in hydrous gel, the aldehyde group-containing substance derived from unreacted N-vinyl carboxylic acid amide reacts, during the hydrolysis step, with a vinylamine (co)polymer occurring after the hydrolysis. As a result, a crosslinked structure is formed to easily cause insolubility in water. As such, it is preferable that the polymerization conversion rate of N-vinyl carboxylic acid amide is as high as possible. Namely, the conversion rate is preferably 90% or more, more preferably 95% or more, even more preferably 98% or more, and particularly preferably 99% or more.

Photopolymerization is performed by developing monomers into a thin film and performing irradiation with light while removing the heat from a single side and/or both sides of a thin film. As the light for irradiation, a light source having a dominant wavelength range of 250 to 500 nm is preferably used. Specifically, e.g. a high pressure mercury lamp, a fluorescent chemical lamp, and a blue fluorescent lamp are used. The intensity of irradiation light may be freely modified e.g. based on an amount of the photoinitiator or the polymerization temperature. However, it is preferably in the range of 0.1 to 100 W/m$^2$ on a surface for irradiation. When the intensity of irradiation light is too weak, the polymerization tends to be slow. On the other hand, when the intensity of irradiation light is too strong, undesirable side reactions such as insolubilization of the polymer tend to be caused. The monomer concentration in the aqueous monomer solution is, relative to the total mass of the aqueous monomer solution, preferably 20% by mass or more, and more preferably 25% by mass or more. Furthermore, it is preferably 90% by mass or less, and more preferably 80% by mass or less. Specifically, it is preferably 20 to 90% by mass, and more preferably 25 to 80% by mass. If the monomer concentration is excessively low, a gel to be obtained tends to be softened so that there can be problems such as adverse influence on drying step owing to an occurrence of fusion of the gel particles having a reduced particle size as well as deterioration in handlability such as transportability and movability. On the other hand, if the monomer concentration is excessively high, the amount of heat generated from the reaction tends to be large, and thus a large cooling facility may be needed or the polymerization rate needs to be slowed down.

Thickness of the thin film at the time of polymerization is preferably 1 mm or more, more preferably 2 mm or more, and even more preferably 5 mm or more. Furthermore, it is preferably 50 mm or less, more preferably 30 mm or less, and even more preferably 20 mm or less. Specifically, it is preferably 1 to 50 mm, more preferably 2 to 30 mm, and even more preferably 5 to 20 mm. If the thickness of a thin film is excessively thin, it is not possible to produce the polymer efficiently. On the other hand, if the thin film is excessively thick, the heat generated during the polymerization cannot be removed sufficiently.

It is preferable that oxygen is removed from the aqueous monomer solution before the polymerization. Removal of oxygen is industrially performed by blowing inert gas such as nitrogen and helium. Furthermore, before the polymerization, the aqueous monomer solution is adjusted to a suitable initiation temperature. The initiation temperature is preferably -20°C or higher, more preferably -10°C or higher, and even more preferably 0°C or higher. Furthermore, it is preferably 70°C or lower, more preferably 50°C or lower, and even more preferably 30°C or lower. More specifically, it is preferably -20 to 70°C, more preferably -10 to 50°C, and even more preferably 0 to 30°C.

The radical photoinitiator used in the photopolymerization may be co-present in the aqueous monomer solution during the polymerization. As the photoinitiator, it may be appropriately selected from conventionally known compounds. Examples thereof include benzophenone initiators, benzoin initiators, benzoin alkyl ether initiators, benzyl dimethyl ketal initiators, α-hydroxyketone initiators, and bisacylphosphine oxide initiator. Specific examples of the photoinitiator include benzophenone, benzoin, benzoin ethyl ether, 2,2-dimethoxy-1,2-diphenylethan-1-one, 1-hydroxy-cyclohexyl phenyl ketone, 2-hydroxy-2-methyl-1-phenyl-propan-1-one, 1-[4-(2-hydroxyethoxy)-phenyl]-2-hydroxy-2-methyl-1-propan-1-one, 2-methyl-1-[4-(methylthio)phenyl]-2-morpholino-propan-1-one, 2-benzyl-2-dimethylamino-1-(4-morpholinophenyl)-1-butan-1-one, bis(2,6-dimethoxybenzoyl)-2,4,4-trimethyl-1-pentyl phosphine oxide, bis(2,4,6-trimethylbenzoyl)-phenyl phosphine oxide, and (2,4,6-trimethylbenzoyl)-diphenyl phosphine oxide. The use amount of the photoinitiator is preferably 0.001% by mass or more, more preferably 0.002% by mass or more, and even more preferably 0.005% by mass or more relative to the monomer. Furthermore, it is preferably 1% by mass or less, more preferably 0.5% by mass or less, and even more preferably 0.2% by mass or less. Specifically, it is preferably 0.001 to 1% by mass, more preferably 0.002 to 0.5% by mass, and even more preferably 0.005 to 0.2% by mass. The photoinitiator may be used either singly, or in combination of any two or more thereof.

The photoinitiator may be used in combination with an appropriate sensitizer. Examples of the sensitizer include amines, halides such as iodonium salts, and thioxantones. Specific examples of the sensitizer include methyldiethanol amine, bisdiethylaminobenzophenone, diethyl thioxanthone and isopropyl thioxanthone. Further, in some cases, an azo initiator may be used in combination as an initiator. Specific examples of the azo initiator include 2,2'-azobis(4-methoxy-2,4-dimethylvaleronitrile), 2,2'-azobis(2,4-dimethylvaleronitrile), 2,2'-azobis-isobutyronitrile, 2,2'-azobis(2-amidinopropane)dihydrochloride, 2,2'-azobis[2-(2-imidazolin-2-yl)propane] or a dihydrochloride or a diacetate thereof, 2,2'-azobis[2-methyl-N-(2-hydroxyethyl)propionamide], dimethylester 2,2'-azobis-isobutyrate, and 4,4'-azobis(4-cyanovaleric acid) or a disodium salt or a dipotassium salt thereof. These azo compounds may be used in combination of any two or more thereof. The use amount of the azo compound is preferably 1% by mass or less, more preferably 0.5% by mass or less, and even more preferably 0.2% by mass or less relative to 100% by mass of the monomer. Furthermore, it is preferably 0.001% by mass or more, more preferably 0.002% by mass or more, and even more preferably 0.005% by mass or more. Specifically, it is preferably 0.001 to 1% by mass, more preferably 0.002 to 0.5% by mass, and even more preferably 0.005 to 0.2% by mass.

In both of the adiabatic polymerization and photopolymerization, the N-vinyl carboxylic acid amide polymer can be obtained as massive hydrous gel upon the completion of the polymerization. Herein, the water content in the hydrous gel is preferably 10 to 80%. As described herein, the expression "water content" means the amount of water in hydrous gel relative to the total mass of hydrous gel obtained. The water content can be obtained by a method in which precisely weighed hydrous gel is heated for 120 minutes at 110°C and the reduced amount obtained by gravimetric method is used as water content. The obtained massive hydrous gel is generally disintegrated and then pulverized to be prepared in particulate form. The longest diameter of the particulate product obtained by disintegration is preferably 5 cm or less, more preferably 2 cm or less, and even more preferably 1 cm or less. Furthermore, the shortest diameter of the particulate product is preferably 1 mm or more, more preferably 3 mm or more, and even more preferably 5 mm or more. More specifically, it is preferably 1 mm to 5 cm, more preferably 3 mm to 2 cm, and even more preferably 5 mm to 1 cm. As a method for disintegration, e.g. there is a method for cutting the gel with a cutter and a method for cutting the gel by extruding with a meat chopper. In the case of using a meat chopper, the hole size of the die of the meat chopper is preferably 5 cm or less, more preferably 2 cm or less, and even more preferably no more than 1 cm in accordance with the longest diameter described above. Furthermore, it is preferably 1 mm or more, more preferably 3 mm or more, and even more preferably 5 mm or more. More specifically, it is preferably 1 mm to 5 cm, more preferably 3 mm to 2 cm, and even more preferably 5 cm to 1 cm. To suppress the adhesion among particles, an auxiliary agent may be used. In general, a surface active agent is used in addition to polyalkylene glycols and various oils such as silicone oils.

The particulate product of hydrous gel as obtained from above can be dried until the water content is to be 5 to 30% by mass. As described herein, the water content means the amount of water in particulate product of hydrous gel relative to the total mass of particulate product of hydrous gel. As a dryer, various known devices such as a band dryer, a vibrating fluid dryer, a disc dryer, and a conical dryer are used. The drying conditions can be suitably selected. However, if the temperature is excessively low, the drying efficiency is poor. On the other hand, excessively high temperature may cause deterioration of a polymer. It is also known that, as the drying temperature increases, aldehydes as a cause of insolubilization during hydrolysis increase. Among them, an increase in $\alpha,\beta$-unsaturated aldehyde (hereinbelow, referred to as "unsaturated aldehyde") is significant. As described herein, the "$\alpha,\beta$-unsaturated aldehyde" indicates those having an unsaturated bond and an aldehyde group in the molecule, and specific examples thereof include crotonic aldehyde, 2,4-hexadienal (sorbic aldehyde), and cinnamic aldehyde. Thus, as for the drying temperature, the temperature of the polymer is preferably 40°C or higher, more preferably 50°C or higher, and even more preferably 60°C or higher. Furthermore, it is preferably 105°C or lower, more preferably 100°C or lower, and even more preferably 100°C or lower. More specifically, it is preferably 40 to 105°C, more preferably 50 to 100°C, and even more preferably 60 to 100°C. The dried polymer can be pulverized to powder by a known method. As a method for pulverization, e.g. there is a method for using Wiley type pulverizer, a ball mill type pulverizer or a hammer mile type pulverizer. The particle size of the powder can be arbitrarily set. However, if it is excessively large, it may take time to dissolve, and if it is excessively small, a so-called agglomerate may be generated during dissolution or, it may adversely affect the working environment due to fine powder, and thus not desirable. The powder preferably has a size such that it can pass through a sieve with mesh size of 4, and more preferably has a size such that it can pass through a sieve with mesh size of 10. Furthermore, it preferably has a size such that it remains on a sieve with mesh size of 500, and more preferably has a size such that it remains on a sieve with mesh size of 100. The powder having a size within the range of from pass on 4 mesh to remain on 500 mesh is preferably present in an amount of 80% or more, and more preferably 90% or more of the total mass of the powder. More specifically, the average particle diameter of the powder after drying is preferably 0.25 to 5 mm, and more preferably 0.25 to 2 mm. Meanwhile, the average particle diameter can be measured according to the following method.

(Measurement of average particle diameter)

Weights of each standard sieve with operting size (unit: $\mu$m) of 1700, 1000, 710, 500, 250, or 75 and a saucer dish were measured. After stacking them, 10 g of the polymer in powder form was put on the uppermost sieve. Subsequently, it was set on an electronic vibrating sieve machine followed by vibration for 5 minutes. Weight of each sieve and saucer dish was measured, and the difference in weight was obtained. The ratio of the polymer remained on each sieve was calculated. An integrated distribution curve was obtained from the resulting particle size distribution, and the particle diameter at the integrated value of 50% was used as an average particle diameter.

The content of $\alpha,\beta$-unsaturated aldehyde in the obtained N-vinylcarboxylic acid amide (co)polymer in powder form is preferably 0.05% by mass or less, and more preferably 0.03% by mass or less relative to the polymer. If it is more than 0.05% by mass, the addition amount of an insolubilization inhibitor, which is described below, is increased, thereby yielding a poor result in terms of economic value.

<Method for producing N-vinylamine (co)polymer>

The method for producing a vinylamine (co)polymer in the present invention is a method for producing a vinylamine (co)polymer by hydrolysis of N-vinylcarboxylic acid amide (co)polymer having crosslinked bonds, in which at least a part of the crosslinked bonds are dissociated by the hydrolysis.

As the N-vinylcarboxylic acid amide (co)polymer having crosslinked bonds is either partially or completely hydrolyzed, a vinylamine (co)polymer suitable for use as a chemical for paper-making or a coagulant is yielded. During the hydrolysis step, the N-vinyl carboxylic acid amide polymer having crosslinked bonds is converted to a vinylamine (co)polymer by contacting with an acid or a base, and at least a part of the crosslinked bonds are dissociated. As described herein, the expression "at least a part of the crosslinked bonds are dissociated" means that the amide bond or ester bond included in the crosslinked bonds is hydrolyzed. Furthermore, not all of the amides bonds or ester bonds present in the crosslinked structured may be hydrolyzed but a part of the amide bonds and ester bonds are hydrolyzed. The amide bonds or ester bonds included in the crosslinked bonds to be hydrolyzed is preferably 80 to 100% by mol, and more preferably 90 to 100% by mol relative to the total mole number of the amide bond or ester bond included in the crosslinked bonds.

Furthermore, in the N-vinyl carboxylic acid amide unit, not all of the amide bonds may be hydrolyzed but only part of the amide bonds are hydrolyzed. The N-vinyl carboxylic acid amide unit to be hydrolyzed is preferably 10 to 100% by mol, and more preferably 10 to 90% by mol relative to the whole N-vinyl carboxylic acid amide unit. Examples of a method for hydrolysis include a method for suspending powder obtained by drying a N-vinyl carboxylic acid amide having crosslinked bonds in water in the presence of an acid or a base followed by hydrolysis, a method for obtaining a particulate product by disintegrating massive gel of an N-vinyl carboxylic acid amide having crosslinked bonds followed by hydrolysis according to mixing the particulate product with an acid or a base, and a method for dispersing an N-vinyl carboxylic acid amide having crosslinked bonds in water-in-oil type in a hydrocarbon-based dispersion medium followed by hydrolysis according to addition of an acid or a base. However, in order to have homogeneous hydrolysis, it is preferable to perform the reaction after suspension in water in the presence of an acid or a base. Furthermore, in order to improve the productivity or transportability, it is preferable to perform the reaction under the conditions in which the polymer concentration (concentration of N-vinyl carboxylic acid amide polymer) is as high as possible. The polymer concentration is determined in view of the balance between capability of a dissolving device and economic value. However, in a usual case in which suspension is made in water in the presence of an acid or a base, it is preferably 0.1% by weight or more, more preferably 1% by weight or more, and even more preferably 2% by weight or more relative to the total mass of the suspension. Furthermore, it is preferably 30% by weight or less, more preferably 20% by weight or less, and even more preferably 15% by weight or less. More specifically, it is preferably 0.1 to 30% by weight, more preferably 1 to 20% by weight, and even more preferably 2 to 15% by weight. In the case of dispersion in which dispersion is made to have water-in-oil type dispersion, the polymer concentration is preferably 0.1 to 50% by weight, and more preferably 5 to 40% by weight relative to the total mass of the suspension.

When there is a large amount of unreacted N-vinyl carboxylic acid amide remained in hydrous gel, the aldehyde group-containing substance derived from unreacted N-vinyl carboxylic acid amide reacts with a vinylamine (co)polymer occurred after the hydrolysis during the hydrolysis step. As a result, a crosslinked structure is formed to easily cause insolubility in water. Therefore, it is also possible that a treatment for preventing insolubilization is performed before the hydrolysis by using an insolubilization preventing agent. The insolubilization preventing agent means a substance having high reactivity with an aldehyde group, which can cause a redox reaction or an oximation reaction with an aldehyde group, is added either before or simultaneously with the hydrolysis. Examples of such substance include hydroxylamine or a hydrochloride salt or a sulfate salt thereof, hydrogen peroxide, sodium borohydride, ascorbic acid, sodium hydrogen sulfate, sulfur dioxide, sodium dithionite, aminoguanidine, phenylhydrazine, urea, ethylene urea, propylene urea, ammonia, ammonium chloride, and ammonium sulfate described in JP 5-86127 A or JP 5-125109 A. In particular, hydroxylamine, hydroxylamine hydrogen chloride salt, hydroxylamine sulfate salt, sodium borohydride, ammonia, ammonium chloride, and ammonium sulfate are preferable.

The use amount of the insolubilization preventing agent may vary depending on the amount of monomers remained in the N-vinyl carboxylic acid amide or the amount of aldehyde present as impurities. However, it is preferably 0.1 part by mass or more, and more preferably 0.2 part by mass or more relative to 100 parts by mass of the polymer. Furthermore, it is preferably 10 parts by mass or less, and more preferably 4 parts by mass or less. Specifically, it is preferably 0.1 to 10 parts, and more preferably 0.2 to 4 parts by mass relative to 100 parts by mass of the polymer. The insolubilization preventing agent may be added either after dissolving the polymer powder, or it may be added in advance to water which is used for dissolving the polymer powder. It may be also added to hydrous gel or polymer powder.

When a solution of the N-vinylcarboxylic acid amide (co)polymer having crosslinked bonds obtained as described above is heated, the hydrolysis can be promoted. The hydrolysis temperature is preferably 30°C or higher, more preferably 50°C or higher, and even more preferably 60°C or higher. Furthermore, it is preferably 180°C or lower, more preferably 140°C or lower, and even more preferably 100°C or lower. More specifically, it is preferably 30 to 180°C, more preferably 50 to 140°C, and even more preferably 60 to 100°C. When the hydrolysis reaction is performed at excessively low temperature, it takes time to dissociate at least a part of the crosslinked bonds, thereby making it difficult to have a homogeneous solution. Accordingly, heterogeneous hydrolysis is caused. On the other hand, when the hydrolysis is performed at excessively high temperature, it may cause a deterioration of the polymer. The heating time can be determined depending on desired hydrolysis rate. However, since the deterioration may be accelerated if the heating is carried out for a long period of time at high temperature, it is preferably within 48 hours, more preferably within 24 hours, and even more preferably within 12 hours. Depending on the conditions for hydrolysis, the acid or base used for hydrolysis may remain in the vinylamine (co)polymer. The remaining acid or base may be neutralized, if necessary.

The hydrolysis is preferably performed by using a strong acid or a strong base.

Examples of the acid preferred for the hydrolysis among inorganic acids include hydrogen halide (for an aqueous solution, hydrochloric acid), sulfuric acid, nitric acid, and phosphoric acid (ortho- and meta-polyphosphoric acid). Among organic acids, examples thereof include carboxylic acid with 1 to 5 carbon atoms such as formic acid, acetic acid, or propionic acid, and aliphatic or aromatic sulfonic acid such as methanesulfonic acid, benzenesulfonic acid, or toluenesulfonic acid. Among them, hydrochloric acid is preferable.

A base preferred for the hydrolysis is a hydroxide of the metal of Group 1 and Group 2 of Periodic Table. Specific examples thereof include lithium hydroxide, sodium hydroxide, potassium hydroxide, calcium hydroxide, strontium hydroxide, and barium hydroxide. Furthermore, ammonia and an alkyl derivative of ammonia such as alkyl- or arylamine are also preferable. Examples of the amines include trimethylamine, monoethanolamine, diethanolamine, triethanolamine, morpholine, and aniline. Among them, ammonia, sodium hydroxide solution, and potassium hydroxide solution are preferable.

The use amount of the acid or base may vary depending on desired hydrolysis rate. However, relative to the total addition amount of N-vinyl carboxylic acid amide used for producing a target vinylamine (co)polymer and the copolymerized crosslinking agent, it is preferably 0.8 molar equivalent or more, and more preferably 1 molar equivalent or more. Furthermore, it is preferably 2 molar equivalents or less, and more preferably 1.5 molar equivalents or less. Specifically, it is preferably 0.8 to 2 molar equivalents, and more preferably 1 to 1.5 molar equivalents. Furthermore, the acid or base is preferably dissolved and then added as a solution to the hydrolysis reaction. For such case, a solution with higher concentration is preferred from the viewpoint of controlling the reaction. The hydrolysis rate is, as a ratio relative to the N-vinyl carboxylic acid amide monomer, preferably 0.1% by mol or more, and more preferably 1% by mol or more. Furthermore, it is preferably 100% by mol or less, and more preferably 95% by mol or less. More specifically, it is preferably 0.1 to 100% by mol, and more preferably 1 to 95% by mol.

<Vinylamine (co)polymer>

The vinylamine (co)polymer of the present invention is obtained by hydrolysis of an N-vinylcarboxylic acid amide (co)polymer. The vinylamine (co)polymer is a (co)polymer containing vinylamine unit and is soluble in water. It also includes, as a crosslinking agent unit, a crosslinking agent unit in which a part of the structure in the crosslinking agent unit (amide bond or ester bond) is hydrolyzed and converted to a carboxyl group or a hydroxyl group.

The vinylamine unit is preferably 9.5 to 99.9% by mol and more preferably 10 to 90% by mol relative to the whole structural units constituting the vinylamine (co)polymer.

The hydrolyzed crosslinking agent unit in the crosslinking agent unit is preferably 80 to 100% by mol and more preferably 90 to 100% by mol relative to the whole crosslinking agent units.

It is preferable that the vinylamine (co)polymer has reduced viscosity of 0.1 to 10 dL/g at 25°C when the polymer is contained at 0.1 g/dL in 1 mol/L aqueous solution of sodium chloride.

The reduced viscosity can be measured by the following method.

(Measurement of reduced viscosity)

As aqueous solution of vinylamine (co)polymer is dissolved in 1 N sodium chloride solution to have net concentration of 0.1 g/dL to obtain a sample solution. The flow time is measured at 25°C by using an Ostwald viscometer. Similarly, the flow time is measured for 1 N sodium chloride solution, and the reduced viscosity is obtained based on the following equation.

[Equation 1]

$$\text{Reduced viscosity } \eta_{sp}/C = (t-t_0)/t_0/0.1 \ [dL/g]$$

t: Flow time (seconds) of sample solution
$t_0$: Flow time (seconds) of 1 N sodium chloride solution.

The ratio (molar ratio) of the hydrolyzed crosslinking agent unit and vinylamine unit in vinylamine (co)polymer to be obtained is preferably 95 : 5 to 99.9 : 0.1, and more preferably 97 : 3 to 99.5 : 0.5. By having the ratio within this numerical value range, the vinylamine (co)polymer to be obtained can have higher water solubility.

The N-vinylcarboxylic acid amide (co)polymer having crosslinked bonds obtained by the present invention has excellent handlability towing to high gel strength, and thus it is possible to produce a polymer with a broad range of molecular weight. Furthermore, since the crosslinked bonds that are formed by copolymerization with a crosslinking agent are easily hydrolyzed by a strong acid or a strong base, the vinylamine (co)polymer after the hydrolysis has excellent solubility, and thus it is useful as a coagulant for water treatments, in particular, waste water treatments, or as a paper-making chemical employed in paper industries.

The N-vinylcarboxylic acid amide (co)polymer is preferably obtained by polymerization of N-vinyl formamide, polyethylene glycol #600 diacrylate as a crosslinking agent, polyethylene glycol #600 dimethacrylate, or divinyl adipate. For the hydrolysis of N-vinylcarboxylic acid amide (co)polymer, a base is preferably used. In particular, sodium hydroxide is preferable.

EXAMPLES

Hereinbelow, the present invention is described in further detail by way of examples. However, the present invention is not limited to the following examples. Meanwhile, the physical properties described in the examples and comparative examples were measured according to the following methods.

(Evaluation of handlability of gel)

A massive gel specimen of N-vinylcarboxylic acid amide (co)polymer was cut into a size smaller than 3 cm x 3 cm, and subjected to a treatment with meat chopper having die hole diameter of 4.8 mm. In view of the shape of gel which is obtained after die-pass through, handlability of the gel was determined according to the following two-level evaluation as the handlability of gel.

○: Gel maintains the finely-granulated shape, and thus exhibits excellent handlability.
x: Most of gel particles are fused to each other after fine-granulation to yield strand shape, and thus the handlability is poor.

(Measurement of reduced viscosity)

An aqueous solution of vinylamine (co)polymer after hydrolysis was dissolved in 1 N sodium chloride solution to have net concentration of 0.1 g/dL to obtain a sample solution. The flow time was measured at 25°C by using an Ostwald viscometer. Similarly, the flow time was measured for 1 N sodium chloride solution, and the reduced viscosity was obtained based on the following equation.

[Equation 2]

$$\text{Reduced viscosity } \eta_{sp}/C = (t-t_0)/t_0/0.1 \ [dL/g]$$

t: Flow time (seconds) of sample solution
$t_0$: Flow time (seconds) of 1 N sodium chloride solution.

(Measurement of insolubles of N-vinylcarboxylic acid amide (co)polymer or vinylamine (co)polymer)

Desalinated water was added such that N-vinylcarboxylic acid amide (co)polymer or a vinylamine (co)polymer is present at 1% by mass and the whole amount of the aqueous solution was adjusted to 500 g. After being stirred for 1 hour at 280 revolutions/minute, the solution is filtered through a wire screen with a mesh size of 180 μm. The insolubles on a wire screen were washed with tap water. Then, by having the insolubles on a wire screen as a gel portion, the weight was measured.

(Measurement of $\alpha,\beta$-unsaturated aldehyde content in N-vinylcarboxylic acid amide (co)polymer)

2 g of N-vinylcarboxylic acid amide (co)polymer was added to a conical flask, and 20 ml of methanol was added thereto. After performing the stirring for 5 hours at room temperature, the polymer and methanol were separated from each other by using a filter paper. To the separated methanol, 35% aqueous solution of hydrochloric acid was added such that the solution can have pH of 1 followed by addition of 2,4-dinitrophenylhydrazine in an amount of 0.01 g. The resulting mixed solution was reacted for 1 hour at 45°C, and then subjected to 10x dilution with an aqueous solution containing 45% by volume of ultra pure water/55% by volume of acetonitrile. The derivatives in the diluted solution which has been generated by the above reaction were subjected to a quantitative analysis according to absolute calibration method which uses liquid chromatography at the following conditions for analysis. Accordingly, content of the unsaturated aldehyde was calculated.

System of analysis: Shimadzu LC analytical system
Column: ODP column (Shodex ODP 4.6 mm x 250 mm H)
Eluent: 45% by volume of ultra pure water/55% by volume of acetonitrile
Flow rate: 1 ml/min
Temperature for analysis: 40°C
Injection amount of sample: 20 μl
Detector: UV detector (wavelength: 360 mn)

(Example 1)

0.3 part by weight of polyethylene glycol (average molecular weight of 20000) relative to 68 parts by weight of deionized water, and 0.5% by mass (relative to the monomer) of sodium phosphinate as a chain transfer agent were dissolved followed by mixing with 32 parts by weight of N-vinyl formamide (purity of 99% by mass). In the obtained aqueous monomer solution, polyethylene glycol #600 diacrylate (trade name: NK Ester A-600, manufactured by Shin Nakamura Chemical Co., Ltd.) was dissolved in an amount of 7% by mass relative to the raw material monomer. Accordingly, by adjusting the pH of the aqueous monomer solution to 6.3 using phosphoric acid, a monomer preparation solution was obtained.

The monomer preparation solution was cooled to -2°C and then transferred to an adiabatic reaction vessel equipped with a thermometer. After purge with nitrogen for 15 minutes, 0.15% by mass (relative to the monomer) of 2,2'-azobis(2-amidinopropane)dihydrochloride (trade name: V-50, manufactured by Wako Pure Chemical Industries, Ltd.) and 0.1% by mass (relative to the monomer) of t-butyl hydroperoxide (trade name: Perbutyl H-69, manufactured by NOF CORPORATION) were added as a 10% by mass aqueous solution thereto. Thereafter, by adding 0.1% by mass (relative to the monomer) of sodium hydrogen sulfite as a 10% by mass aqueous solution, adiabatic polymerization was initiated.

After 120 minutes from initiating the polymerization, the internal temperature of the system reached 92°C. After that, it was additionally maintained for 60 minutes in the reaction vessel. Then, the generated polymer was collected from the reaction vessel, and then was disintegrated with a meat chopper. The obtained particulate gel product maintained a fine-granulate shape and exhibited good handlability. Subsequently, the particulate gel product was dried for 1.5 hours using an air blowing dryer such that the polymer has temperature of 105°C. After that, it was pulverized to obtain powder. As a result of measuring the content of $\alpha,\beta$-unsaturated aldehyde in the powdered N-vinyl formamide (co)polymer, it was found that the content has 0.0076% by mass relative to 100% by mass of the N-vinyl formamide (co)polymer.

Next, to an aqueous solution obtained by adding 7 g of 48% by mass sodium hydroxide and 0.6 g of sodium dithionite to 123 g of water, 15 g of the powdered N-vinyl formamide (co)polymer which has been obtained from the polymer described above was added by small portions followed by dissolving for 2 hours at 50°C. After that, the hydrolysis reaction was performed at 80°C for 3 hours. Accordingly, an aqueous solution of vinylamine (co)polymer (concentration: 10% by mass) in which 41% by mol of the entire N-vinyl formamide unit is converted to a vinylamine unit was obtained. The resulting aqueous solution was diluted and dissolved to 1% by mass, and measurement of insolubles was performed. Meanwhile, the obtained vinylamine (co)polymer has reduced viscosity of 0.5 dL/g. The results are shown in Table 1.

(Example 2)

The N-vinyl formamide (co)polymer was obtained by performing the same operations as those of Example 1 except that polyethylene glycol #600 diacrylate is changed to polyethylene glycol #600 dimethacrylate (trade name: NK Ester 14G, manufactured by Shin Nakamura Chemical Co., Ltd.). The obtained particulate gel product maintained a finely-granulated shape and exhibited good handlability.

Next, the hydrolysis was performed in the same method as Example 1 to obtain an aqueous solution of vinylamine (co)polymer (concentration: 10% by mass) in which 40% by mol of the entire N-vinyl formamide unit is converted to a vinylamine unit. The resulting aqueous solution was diluted and dissolved to 1% by mass, and measurement of insolubles was performed. Meanwhile, the obtained vinylamine (co)polymer has reduced viscosity of 0.6 dL/g. The results are shown in Table 1.

(Example 3)

The N-vinyl formamide (co)polymer was obtained by performing the same operations as those of Example 1 except that polyethylene glycol #600 diacrylate is changed to divinyl adipate. The obtained particulate gel product maintained a finely-granulated shape and exhibited good handlability.

Next, the hydrolysis was performed in the same manner as Example 1 to obtain an aqueous solution of vinylamine (co)polymer (concentration: 10% by mass) in which 40% by mol of the entire N-vinyl formamide unit was converted to a vinylamine unit. The resulting aqueous solution was diluted and dissolved to 1% by mass, and measurement of insolubles was performed. Meanwhile, the obtained vinylamine (co)polymer had reduced viscosity of 0.6 dL/g. The results are shown in Table 1.

(Example 4)

50 parts by mass of deionized water was admixed with 50 parts by mass of N-vinyl formamide (purity of 99% by mass). In the obtained aqueous monomer solution, polyethylene glycol #600 diacrylate (trade name: NK Ester A-600, manufactured by Shin Nakamura Chemical Co., Ltd.) was dissolved in an amount of 0.2% by mass relative to the monomer. Accordingly, by adjusting the pH of the aqueous monomer solution to 6.3 using phosphoric acid, a monomer preparation solution was obtained.

To the monomer preparation solution, 0.5% by mass (relative to the monomer) of 10% by mass aqueous solution of sodium phosphinate as a chain transfer agent and 0.4% by mass (relative to the monomer) of photopolymerization initiator D4265 (manufactured by Ciba Specialty Chemicals) were added. Then, according to purge with nitrogen for 20 minutes with cooling to 10°C, the dissolved oxygen was removed.

Onto a bottom surface made of stainless steel of a tray-like container (bottom surface: 200 mm x 200 mm), a polyethylene terephthalate film [base film with thickness of 12 $\mu$m, PVDC (polyvinylidine chloride) coating thickness of 4 $\mu$m] was applied. Then, the above monomer preparation solution was added in an amount which allows the liquid thickness of 10 mm and the top part was covered with a polyethylene terephthalate film. Irradiation with a fluorescent chemical lamp is performed from the top such that the intensity is 10 W/m$^2$ on irradiation surface. During the irradiation, cold water at 10°C was sprayed onto the stainless steel surface of the container to remove the polymerization heat. After 60 minutes from starting the reaction, spraying of cold water was terminated, the irradiation intensity was increased to 20 W/m$^2$, and then the polymerization was further performed for additional 90 minutes. The maximum polymerization temperature was observed after 85 minutes from starting the irradiation. After 150 minutes of photopolymerization in total, the polymer produced was collected from the reaction vessel to obtain polymer gel.

The above polymer gel was cut into a size of 2 cm x 2 cm, and then the gel pieces obtained were subjected to a treatment with a meat chopper having die hole diameter of 4.8 mm to prepare gel pieces in form of a small particulate product with a size smaller than 5 mm x 5 mm. The obtained particulate gel product maintained a finely-granulated shape and exhibited good handlability. Subsequently, the particulate gel product was dried for 1.5 hours by using an air blowing dryer at 105°C followed by pulverization to obtain a powder.

Next, the hydrolysis was performed in the same manner as Example 1 to obtain an aqueous solution of vinylamine (co)polymer (concentration: 10% by mass) in which 40% by mol of the entire N-vinyl formamide unit was converted to a vinylamine unit. The resulting aqueous solution was diluted and dissolved to 1% by mass, and measurement of insolubles was performed. Meanwhile, the obtained vinylamine (co)polymer has reduced viscosity of 0.5 dL/g. The results are shown in Table 1.

(Example 5)

The polymerization was performed in the same manner as Example 1 except that N-vinyl formamide having purity of 99% of Example 1 was changed to N-vinyl formamide having purity of 92% and added to the initiator described in Example 1, and 0.03% by mass (relative to the monomer) of ferrous sulfate was added as a 5% by mass aqueous solution thereto. After 150 minutes from starting the reaction, the internal temperature of the system reached 91°C, and sufficient polymerization rate can be maintained even with N-vinyl formamide having low purity. The obtained particulate gel product of N-vinyl formamide (co)polymer maintained a finely-granulated shape and exhibited good handlability.

Next, the hydrolysis was performed in the same manner as Example 1 to obtain an aqueous solution of vinylamine (co)polymer (concentration: 10% by mass) in which 40% by mol of the entire N-vinyl fonnamide unit is converted to a vinylamine unit. The resulting aqueous solution was diluted and dissolved to 1% by mass, and measurement of insolubles was performed. Meanwhile, the obtained vinylamine (co)polymer has reduced viscosity of 0.5 dL/g. The results are shown in Table 1.

(Comparative Example 1)

The operation was performed in the same manner as Example 1 to obtain an N-vinyl formamide (co)polymer except that polyethylene glycol #600 diacrylate is not added. However, since most of the gel particles were fused after fine-granulation and existed in strand form, the handlability was poor.
Next, the hydrolysis was performed in the same manner as Example 1 to obtain an aqueous solution of vinylamine (co)polymer (concentration: 10% by mass) in which 40% by mol of the entire N-vinyl formamide unit was converted to a vinylamine unit. The resulting aqueous solution was diluted and dissolved to 1% by mass, and measurement of insolubles was performed. Meanwhile, the obtained vinylamine (co)polymer has reduced viscosity of 0.6 dL/g. The results are shown in Table 1.

(Comparative Example 2)

The operation was performed in the same manner as Example 2 to obtain an N-vinyl formamide (co)polymer except that polyethylene glycol #600 diacrylate was not added. However, since most of the gel particles were fused after fine-granulation and existed in strand form, the handlability was poor.
Next, the hydrolysis was performed in the same manner as Example 1 to obtain an aqueous solution of vinylamine (co)polymer (concentration: 10% by mass) in which 40% by mol of the entire N-vinyl formamide unit was converted to a vinylamine unit. The resulting aqueous solution was diluted and dissolved to 1% by mass, and measurement of insolubles was performed. Meanwhile, the obtained vinylamine (co)polymer has reduced viscosity of 0.6 dL/g. The results are shown in Table 1.

(Comparative Example 3)

The operation was performed in the same manner as Example 1 to obtain an N-vinyl formamide (co)polymer. The obtained particulate gel product maintained a finely-granulated shape and exhibited good handlability.
Next, without performing the hydrolysis, the dissolving operation was performed with addition of deionized water such that the N-vinyl formamide (co)polymer has concentration of 10% by mass. However, the N-vinyl formamide (co)polymer powder only expanded without dissolving. The solution was diluted and dissolved to 1% by mass, and measurement of insolubles was performed. The results are shown in Table 1.

(Comparative Example 4)

The operation was performed in the same manner as Example 1 to obtain an N-vinyl formamide (co)polymer except that polyethylene glycol diacrylate was changed to tetraallyl oxyethane. The obtained particulate gel product maintained a finely-granulated shape and exhibited good handlability.
Next, the hydrolysis was performed in the same manner as Example 1. However, the N-vinyl formamide (co)polymer powder only expands without completion being dissolved completely. The solution was diluted and dissolved to 1% by mass, and measurement of insolubles was performed. The results are shown in Table 1.
The particulate gel product obtained from Examples 1 to 5 maintained a finely-granulated shape and exhibited good handlability. Furthermore, as a result of hydrolysis of the N-vinyl formamide (co)polymer, a part of the crosslinked bonds were dissociated so that a vinylamine (co)polymer with excellent solubility can be obtained. On the other hand, in the particulate gel product obtained from Comparative Examples 1 and 2, most of the gel particles were fused to each other in strand form, and thus exhibiting poor handlability. The particulate gel product obtained from Comparative Example 3 maintained a finely-granulated shape and exhibited good handlability. However, since hydrolysis was not performed therefor, the partial structure of the crosslinked bonds was not dissociated so that the insolubles were present in a large amount. Furthermore, although the particulate gel product obtained from Comparative Example 4 maintained a finely-granulated shape and exhibited good handlability, as a result of the hydrolysis of the N-vinyl formamide (co)polymer, none of the crosslinked bonds was dissociated so that the insolubles were present in a large amount in the vinylamine (co)polymer which has been obtained after the hydrolysis.

[Table 1]

| | Crosslinking agent | | | Hydrolysis | Gel handlability | Insolubles (g) | Reduced viscosity (dl/g) |
|---|---|---|---|---|---|---|---|
| | Addition amount (% by mass/monomer) | Name | Dissociation or no dissociation of crosslinked bonds by hydrolysis | | | | |
| Example 1 | 7 | Polyethylene glycol #600 diacrylate | Dissociation | Performed | ○ | 0 | 0.5 |
| Example 2 | 7 | Polyethylene glycol #600 dimethacrylate | Dissociation | Performed | ○ | 0 | 0.6 |
| Example 3 | 7 | Divinyl adipate | Dissociation | Performed | ○ | 0 | 0.6 |
| Example 4 | 0.2 | Polyethylene glycol #600 diacrylate | Dissociation | Performed | ○ | 0 | 0.5 |
| Example 5 | 7 | Polyethylene glycol #600 diacrylate | Dissociation | Performed | ○ | 0 | 0.5 |
| Comparative Example 1 | 0 | - | - | Performed | × | 0 | 0.6 |
| Comparative Example 2 | 0 | - | - | Performed | × | 0 | 0.6 |
| Comparative Example 3 | 7 | Polyethylene glycol #600 diacrylate | Dissociation | Not performed | ○ | 150 | Cannot be measured |
| Comparative Example 4 | 7 | Tetraallyl oxyethane | No dissociation | performed | ○ | 100 | Cannot be measured |

EP 3 067 373 B1

INDUSTRIAL APPLICABILITY

According to the present invention, the application can be made widely as a method for producing a vinylamine (co)polymer.

**Claims**

1. A method for producing a vinylamine (co)polymer by hydrolyzing an N-vinylcarboxylic acid amide (co)polymer having crosslinked bonds, wherein at least a part of the crosslinked bonds are dissociated by the hydrolysis, and the N-vinylcarboxylic acid amide (co)polymer is insoluble in water and the vinylamine (co)polymer to be obtained is soluble in water.

2. The production method according to claim 1, wherein the crosslinked bonds are formed by polymerization with N-vinyl carboxylic acid amide by using polyfunctional (meth)acrylate as a crosslinking agent.

3. The production method according to claim 1 or 2, wherein the N-vinylcarboxylic acid amide (co)polymer is an N-vinyl formamide (co)polymer.

4. The production method according to any one of claim 1 to 3, wherein the N-vinylcarboxylic acid amide (co)polymer is an N-vinylcarboxylic acid amide (co)polymer which is obtained by adiabatic polymerization or photopolymerization.

5. The production method according to any one of claim 1 to 4, wherein the N-vinylcarboxylic acid amide (co)polymer is an N-vinylcarboxylic acid amide (co)polymer which is obtained by adiabatic polymerization using ferrous sulfate as a polymerization initiator.

6. The production method according to claim 2, wherein the polyfunctional (meth)acrylate is used at 0.1 to 15% by mass relative to 100% by mass of a raw material monomer of the N-vinylcarboxylic acid amide (co)polymer.

7. The production method according to any one of claim 1 to 6, wherein the N-vinylcarboxylic acid amide (co)polymer is dried at 105°C or lower and pulverized to powder before the hydrolysis.

8. The production method according to any one of claim 1 to 7, wherein the content of unsaturated aldehyde in the N-vinylcarboxylic acid amide (co)polymer is 0.05% by mass or less relative to 100% by mass of the N-vinylcarboxylic acid amide (co)polymer.

9. The production method according to any one of claim 1 to 8, the hydrolysis is carried out in the presence of a strong acid or a strong base.

**Patentansprüche**

1. Verfahren zur Herstellung eines Vinylamin-(Co)Polymers durch Hydrolysieren eines N-Vinylcarbonsäureamid-(Co)Polymers mit vernetzten Bindungen, wobei mindestens ein Teil der vernetzten Bindungen durch die Hydrolyse dissoziiert werden, und das N-Vinylcarbonsäureamid-(Co)Polymer in Wasser unlöslich ist, und das zu erhaltende Vinylamin-(Co)Polymer in Wasser löslich ist.

2. Herstellungsverfahren nach Anspruch 1, wobei die vernetzten Bindungen gebildet sind durch Polymerisation mit N-Vinylcarbonsäureamid durch Verwendung von polyfunktionellem (Meth)Acrylat als ein Vernetzungsmittel.

3. Herstellungsverfahren nach Anspruch 1 oder 2, wobei das N-Vinylcarbonsäureamid-(Co)Polymer ein N-Vinylformamid-(Co)Polymer ist.

4. Herstellungsverfahren nach irgendeinem der Ansprüche 1 bis 3, wobei das N-Vinylcarbonsäureamid-(Co)Polymer ein N-Vinylcarbonsäureamid-(Co)Polymer ist, das erhalten wird durch adiabatische Polymerisation oder Fotopolymerisation.

5. Herstellungsverfahren nach irgendeinem der Ansprüche 1 bis 4, wobei das N-Vinylcarbonsäureamid-(Co)Polymer ein N-Vinylcarbonsäureamid-(Co)Polymer ist, das erhalten wird durch adiabatische Polymerisation unter Verwendung von Eisensulfat als einem Polymerisationsinitiator.

6. Herstellungsverfahren nach Anspruch 2, wobei das polyfunktionelle (Meth)Acrylat mit 0,1 bis 15 Masse%, bezogen auf 100 Masse% eines Rohmaterialmonomers des N-Vinylcarbonsäureamid-(Co)Polymers verwendet wird.

7. Herstellungsverfahren nach irgendeinem der Ansprüche 1 bis 6, wobei das N-Vinylcarbonsäureamid-(Co)Polymer bei 105°C oder darunter getrocknet und vor der Hydrolyse zu Pulver pulverisiert wird.

8. Herstellungsverfahren nach irgendeinem der Ansprüche 1 bis 7, wobei der Gehalt an ungesättigtem Aldehyd in dem N-Vinylcarbonsäureamid-(Co)Polymer 0,05 Masse% oder weniger beträgt, bezogen auf 100 Masse% des N-Vinylcarbonsäureamid-(Co)Polymers.

9. Herstellungsverfahren nach irgendeinem der Ansprüche 1 bis 8, wobei die Hydrolyse in der Gegenwart einer starken Säure oder einer starken Base durchgeführt wird.

**Revendications**

1. Un procédé de production d'un (co)polymère de vinylamine par hydrolyse d'un (co)polymère d'amide d'acide N-vinylcarboxylique ayant des liaisons réticulées, dans lequel au moins une partie des liaisons réticulées est dissociée par l'hydrolyse, et le (co)polymère d'amide d'acide N-vinylcarboxylique est insoluble dans l'eau et le (co)polymère de vinylamine à obtenir est soluble dans l'eau.

2. Le procédé de production selon la revendication 1, dans lequel les liaisons réticulées sont formées par polymérisation avec l'amide d'acide N-vinylcarboxylique en utilisant un (méth)acrylate polyfonctionnel comme agent de réticulation.

3. Le procédé de production selon la revendication 1 ou 2, dans lequel le (co)polymère d'amide d'acide N-vinylcarboxylique est un (co)polymère de N-vinylformamide.

4. Le procédé de production selon l'une quelconque des revendications 1 à 3, dans lequel le (co)polymère d'amide d'acide N-vinylcarboxylique est un (co)polymère d'amide d'acide N-vinylcarboxylique qui est obtenu par polymérisation adiabatique ou photopolymérisation.

5. Le procédé de production selon l'une quelconque des revendications 1 à 4, dans lequel le (co)polymère d'amide d'acide N-vinylcarboxylique est un (co)polymère d'amide d'acide N-vinylcarboxylique obtenu par polymérisation adiabatique utilisant du sulfate ferreux comme initiateur de polymérisation.

6. Le procédé de production selon la revendication 2, dans lequel le (méth)acrylate polyfonctionnel est utilisé à raison de 0,1 à 15% en masse par rapport à 100% en masse d'un monomère de matière première du (co)polymère d'amide d'acide N-vinylcarboxylique.

7. Le procédé de production selon l'une quelconque des revendications 1 à 6, dans lequel le (co)polymère d'amide d'acide N-vinylcarboxylique est séché à 105 °C ou moins et pulvérisé en poudre avant l'hydrolyse.

8. Le procédé de production selon l'une quelconque des revendications 1 à 7, dans lequel la teneur en aldéhyde insaturé dans le (co)polymère d'amide d'acide N-vinylcarboxylique est de 0,05% en masse ou moins par rapport à 100% en masse du (co)polymère d'amide d'acide N-vinylcarboxylique.

9. Le procédé de production selon l'une quelconque des revendications 1 à 8, l'hydrolyse étant réalisée en présence d'un acide fort ou d'une base forte.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013231762 A
- JP 2010059220 A
- JP 2009179724 A
- JP 2000017026 A
- JP 61118406 A
- WO 0058378 A
- JP 3704660 B
- JP 5097931 A
- JP 5086127 A
- JP 5125109 A